# EUROPÄISCHE PATENTSCHRIFT

(11) **EP 0 585 864 B1**
(45) Veröffentlichungstag und Bekanntmachung des Hinweises auf die Patenterteilung: **03.01.1996**
(21) Anmeldenummer: 93113865.5
(22) Anmeldetag: 31.08.1993
(51) Int. Cl.: F24F 3/14, F24F 6/00

(54) **Vorrichtung zur Ermittlung der Nebelkonzentration in einem befeuchteten Luftstrom**
Device for detecting humidity in a moistened air flow
Dispositif pour détecteur d'humidité dans un courant d'air humidifié

(30) Priorität: 02.09.1992 DE 4229173
(43) Veröffentlichungstag der Anmeldung: 09.03.1994
(73) Patentinhaber: LTG LUFTTECHNISCHE GMBH, D-70435 Stuttgart (DE)
(72) Erfinder: Wenger, Paul, Dipl.-Ing., D-71254 Ditzingen (DE)
(74) Vertreter: Grosse, Rainer, Dipl.-Ing.

(56) Entgegenhaltungen:
- DD-A- 144 594
- DE-A- 3 546 232
- DE-A- 3 923 039
- US-A- 4 494 596

## Beschreibung

Die Erfindung betrifft eine Vorrichtung zur Ermittlung der Nebelkonzentration in einem befeuchteten Luftstrom einer lufttechnischen Einrichtung, vorzugsweise einer Lüftungs- oder Klima-Anlage.

In vielen Bereichen der Lufttechnik, insbesondere bei Lüftungs- oder Klima-Anlagen, ist es erforderlich, die zu verwendende Luft aufzubereiten, das heißt, sie gegebenenfalls zu filtern, ihre Temperatur einzustellen und/oder ihre Luftfeuchtigkeit zu beeinflussen.

Bekannt ist es, eine Luftbefeuchtung mittels einer Sprühdüsenanordnung vorzunehmen. In einer durch Zwangsförderung erzeugten Strömung der Luft sind Sprühdüsen angeordnet, die das Befeuchtungsmittel, insbesondere Wasser, versprühen. Alternativ gibt es jedoch auch andere Befeuchtungssysteme, so zum Beispiel Rieselbefeuchter oder die Befeuchtung durch Wasserzerstäubung durch das Laufrad eines Ventilators oder die Befeuchtung durch Schleuderbefeuchter.

Stets ist ein intensiver Stoffaustausch zwischen der Luft und dem Befeuchtungsmedium erwünscht, um mit möglichst geringem Aufwand einen hohen Befeuchtungsgrad zu erzielen. Die Konzentration des Feuchtigkeitsnebels in der Luft (gegebenenfalls nach dem Wasserabscheider) darf jedoch nur bis zu einer Höchstgrenze vorliegen, die nicht zu einem Niederschlag in Form von Wassertropfen führt, damit die nachgeschalteten Einrichtungen der lufttechnischen Anlage, zum Beispiel ein Kanalsystem, trocken bleiben. Wird dieses Maß der Nebelkonzentration überschritten, bildet sich Niederschlag, der nicht erwünscht ist.

Der Befeuchtungsvorrichtung ist zumeist ein Wasserabscheider nachgeschaltet, der größere Wassertropfen der Luftströmung abscheidet und nur den feinen Feuchtigkeitsnebel passieren läßt. Die Nebelkonzentration der Luft nach Passieren des Wasserabscheiders muß also derart eingestellt sein, daß einerseits ein Feuchtigkeitsniederschlag vermieden ist, aber andererseits die Nebelkonzentration an einer zulässigen Grenze gehalten wird, damit zum Beispiel die Kühlleistung der lufttechnischen Anlage möglichst hoch ist. Die Luft befindet sich dabei in einem Übersättigungszustand; sie weist feinste Wassertröpfchen (Nebel) bis zu einer bestimmten Tropfengröße auf. Wird diese Tropfengröße und eine bestimmte Menge an Wassernebel überschritten, so kommt es zum Feuchtigkeitsniederschlag, der vermieden werden soll.

Es ist bekannt, zur Begrenzung der Nebelkonzentration einen Feuchtigkeitsmesser einzusetzen, der die relative Luftfeuchtigkeit mißt, zum Beispiel bei einem Dampfbefeuchter. Allerdings gibt es kein Meßgerät mit dem 100%ige relative Feuchtigkeit zuverlässig gemessen werden kann. Es sind bestenfalls 95% relative Feuchte zuverlässig erfaßbar. Dadurch wird die Befeuchtungsleistung des Waschers nur wegen der Maßeinrichtung beschränkt, da keine 100%ige Sättigung der Luft und auch kein zulässiges Quantum an Nebel, das nachverdunsten kann, möglich ist.

Der von der Feuchtigkeits-Meßeinrichtung ermittelte Wert wird verwendet, um damit die Befeuchtungseinrichtung, zum Beispiel die Wasserzufuhr zu den Sprühdüsen, zu beeinflussen.

Der Erfindung liegt die Aufgabe zugrunde, eine Vorrichtung zur Ermittlung der Nebelkonzentration in einem Luftstrom einer lufttechnischen Einrichtung zu schaffen, die einfach aufgebaut und zuverlässig ist und die an beliebiger Stelle stromab zur Luft-befeuchtungseinrichtung installiert werden kann. Durch diese Einrichtung soll einerseits die adiabatische Kühlleistung einer RLT-Anlage durch Nachverdunstung freier Nebeltröpfchen möglichst groß gemacht und andererseits ein Wasserniederschlag an den luftführenden Teilen nach der Befeuchtungseinrichtung vermieden werden.

Diese Aufgabe wird erfindungsgemäß gelöst, durch mehrere, im Luftstrom angeordnete Feuchtigkeitsniederschlags-Elemente mit unterschiedlichen geometrischen Abmessungen, denen je ein Sensor einer Feuchtigkeits-Sensor-Einrichtung zugeordnet ist. Wird im Luftstrom eine bestimmte Nebelkonzentration überschritten, das heißt, ist die Übersättigung zu groß, so schlägt sich Feuchtigkeit, insbesondere Wasser, an den Feuchtigkeitsniederschlags-Elementen nieder. Aufgrund der unterschiedlich großen geometrischen Ab--messungen dieser Feuchtigkeitsniederschlags-Elemente geschieht dies derart, daß sich an den Feuchtigkeitsniederschlags-Elementen mit den kleinsten Abmessungen zuerst Feuchtigkeit niederschlägt, die von der zugeordneten Feuchtigkeits-Sensoreinrichtung erfaßt wird. Dies hat zur Folge, daß in Abhängigkeit von der Größe der Nebelkonzentration eine entsprechende Anzahl der Feuchtigkeitsniederschlags-Elemente Feuchtigkeit aufweisen werden, wobei die Feuchtigkeitsniederschlags-Elemente mit größeren oder den größten geometrischen Abmessungen nur dann einen Feuchtigkeitsniederschlag aufweisen werden, wenn eine extrem hohe unzulässige Nebelkonzentration vorliegt. Die Anzahl der mit Niederschlag versehenen Feuchtigkeitsniederschlags-Elemente ist somit -beginnend mit denen mit den kleinsten geometrischen Abmessungen- ein Maß für die vorliegende Übersättigung. In entsprechender Weise kann die Feuchtigkeits-Sensoreinrichtung dann auf die Befeuchtungseinrichtung rückwirken und diese derart einstellen, daß eine Nebelkonzentration nur in einem zulässigen Bereich eingestellt wird. Dies kann durch Steuerung oder aber auch durch Regelung erfolgen.

Nach einer Weiterbildung der Erfindung ist vorgesehen, daß die Feuchtigkeitsniederschlags-Elemente als Stäbe mit unterschiedlichen Dickenabmessungen ausgebildet sind. An dem Stab mit der geringsten Dickenabmessung wird sich dann bei zunehmender Übersättigung der Luft zuerst Feuchtigkeit niederschlagen.

Die Stäbe weisen vorzugsweise kreisförmige Querschnitte mit unterschiedlichen Durchmessern auf.

Nach einer bevorzugten Ausführungsform der Erfindung sind die Stäbe hängend im Luftstrom angeordnet, wobei im Bereich ihrer unteren Enden die Feuchtigkeits-Sensoreinrichtung angeordnet ist. Beispielsweise kann diese Feuchtigkeits-Sensoreinrichtung optisch arbeiten, insbesondere sich bildende und zum Stabende laufende Feuchtigkeitstropfen (Wassertropfen) erfassen. Möglich ist ferner auch eine elektrische Widerstandsmessung, die die Feuchtigkeits-Sensoreinrichtung durchführt, um niedergeschlagene Feuchtigkeit auf den Stäben zu ermitteln, oder der Einsatz von hygroskopischem Material.

Die Feuchtigkeits-Sensoreinrichtung ist derart ausgebildet, daß jedem einzelnen Feuchtigkeitsniederschlags-Element ein Sensor zugeordnet ist, so daß sich ändernde Verhältnisse erfaßt werden können (beispielsweise weisen einige der Feuchtigkeitsniederschlags-Elemente bereits niedergeschlagene Feuchtigkeit auf, andere jedoch noch nicht beziehungsweise nicht mehr).

Vorzugsweise ist vorgesehen, die Stäbe reihenförmig nebeneinander anzuordnen, wobei die Längsrichtung der Stabreihe quer, vorzugsweise senkrecht zur Richtung des Luftstroms verläuft, die Stabrichtung selbst ist dabei vorzugsweise ebenfalls senkrecht zum Luftstrom ausgerichtet. Insbesondere können die Stäbe vertikal oder schräg zur Vertikalen verlaufend angeordnet sein.

Die Erfindung betrifft ferner einen Luftwäscher zur Befeuchtung eines Luftstromes einer lufttechnischen Anlage, insbesondere einer Lüftungs- oder Klima-Anlage, mit einer im Luftstrom angeordneten Flüssigkeits-Sprüheinrichtung, wobei die Vorrichtung nach Anspruch 1 die Nebelkonzentration bestimmt und die Flüssigkeits-Sprüheinrichtung derart steuert beziehungsweise regelt, daß ein Feuchtigkeitsniederschlag innerhalb der lufttechnischen Anlage vermieden ist. Hierdurch ist es möglich, durch Steuerung beziehungsweise Regelung der der Sprüheinrichtung zuzuführenden Feuchtigkeitsmenge (Wassermenge) eine maximale Nebelkonzentration im Luftstrom zu schaffen, die jedoch noch nicht zum Niederschlag führt. Die Steuerung beziehungsweise Regelung der Wassermenge erfolgt in Abhängigkeit des Meßergebnisses der Feuchtigkeits-Sensoreinrichtung. Diese ist -gemäß der vorstehenden Aus führungen- mit Feuchtigkeitsniederschlags-Elementen mit unterschiedlichen geometrischen Abmessungen ausgebildet. An den Feuchtigkeitsniederschlags-Elementen mit den kleinsten Abmessungen wird sich zuerst ein Feuchtigkeitsniederschlag bilden, der erkannt wird und zeigt, daß Übersättigung vorliegt, die gewünscht ist. Bei steigender Übersättigung zeigen die nächst dickeren Stäbe Niederschlag, womit die Wasserzufuhr im Regelbereich ist. Erst Wasserniederschlag an den dicksten Stäben signalisiert unzulässig hohe Übersättigung, die schnellstmöglich durch geeignete Reduktion der Wasserzuführung zu beseitigen ist.

Vorteilhaft ist es ferner, wenn die Sprüheinrichtung eine Hochdruck-Sprüheinrichtung ist. Sie weist vorzugsweise Hochdruckdüsen zum Versprühen der Flüssigkeit auf, die mit einem Druck von 20 bis 600 bar betrieben werden. Alternativ ist es natürlich auch möglich, eine Niederdruck-Sprüheinrichtung einzusetzen.

Die Nebelkonzentration kann durch Steuerung beziehungsweise Regelung des Verdüsungsdruckes eingestellt werden. Der Verdüsungsdruck kann vorzugsweise über die Steuerung beziehungsweise Regelung der Drehzahl einer die Hochdruckdüsen speisenden Hochdruckpumpe eingestellt werden. Alternativ ist es auch möglich, die Nebelkonzentration über einen Bypaß im Wasserstrom mit verstellbarem Regelventil bei konstanter Drehzahl der Hochdruckpumpe zu steuern beziehungsweise zu regeln. Zusätzlich oder alternativ ist auch möglich, die Nebelkonzentration bei mehreren Hochdruckdüsen durch An- beziehungsweise Abschalten einzelner Hochdruckdüsen zu steuern beziehungsweise zu regeln.

Eine weitere Möglichkeit, die Nebelkonzentration zu beeinflussen, ist eine Veränderung des Wasserabscheiders aufgrund der Signale von der Übersättigungsmeßeinrichtung.

Die Zeichnungen veranschaulichen die Erfindung anhand eines Ausführungsbeispiels und zwar zeigt:
Figur 1 einen Längsschnitt durch eine Düsenkammer, die eine Flüssigkeits-Sprüheinrichtung und eine Vorrichtung zur Ermittlung der Nebelkonzentration aufweist,
Figur 2 die Vorrichtung zur Ermittlung der Nebelkonzentration in Draufsicht,
Figur 3 die Vorrichtung der Figur 2 in Seitenansicht sowie zusätzlich ausgestattet mit einer Feuchtigkeits-Sensoreinrichtung,
Figur 4 ein weiteres Ausführungsbeispiel einer Vorrichtung gemäß Figur 3 und
Figur 5 ein Blick von unten auf einen Stab der Vorrichtung.

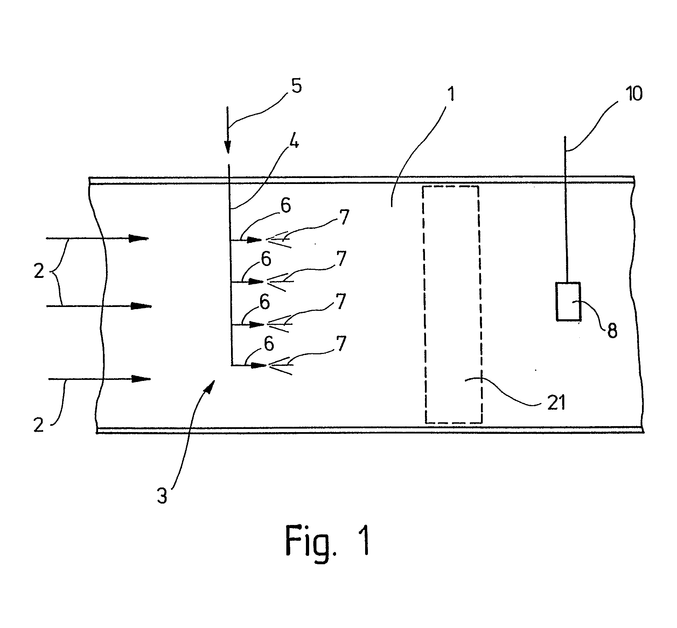

Die Figur 1 zeigt einen Längsschnitt durch eine Düsenkammer 1, die Bestandteil einer nicht näher dargestellten lufttechnischen Einrichtung, zum Beispiel einer Lüftungs- oder Klima-Anlage, ist. Mit geeigneten Mitteln wird ein Luftstrom 2 durch die Düsenkammer 1 hindurchbewegt, wobei eine Hochdruck-Sprüheinrichtung 3 passiert wird. Die Hochdruck-Sprüheinrichtung 3 weist ein Rohrsystem 4 auf, daß mit von einer nicht dargestellten Hochdruckpumpe stammendem Wasser 5 gespeist wird. Am Rohrsystem 4 sind flächenmatrixförmig Hochdruckdüsen 6 angeschlossen, die das Wasser 5 in Form von Sprühkegeln 7 verdüsen, so daß es von dem Luftstrom 2 teilweise aufgenommen werden kann und hierdurch zu einer entsprechenden Nebelkonzentration im Luftstrom 2 führt.

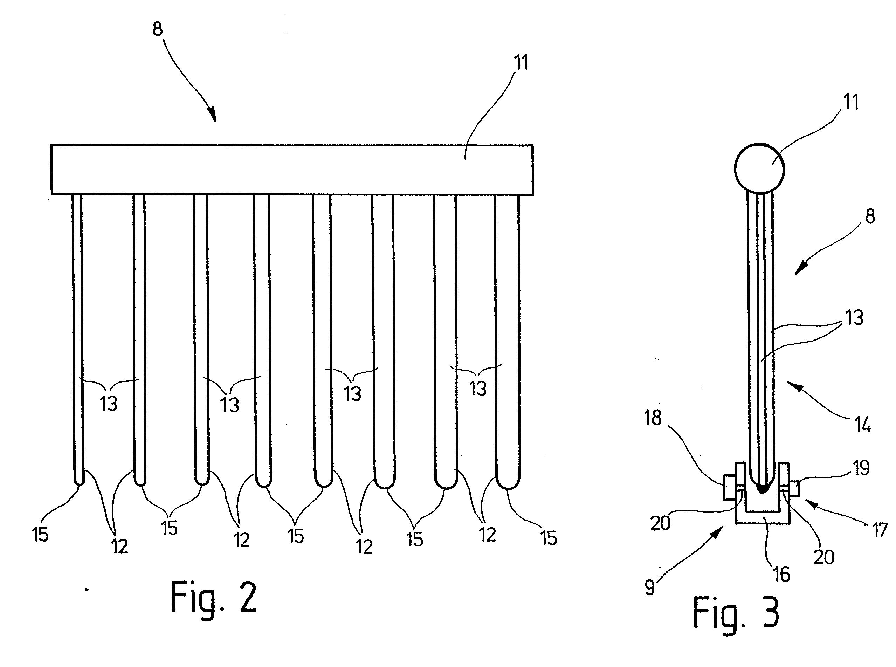

Stromab zur Hochdrucksprüheinrichtung 3 ist eine Vorrichtung 8 zur Ermittlung der Nebelkonzentration in dem befeuchteten Luftstrom 2 vorgesehen. Die Vorrichtung 8 ist mit einer Flüssigkeits-Sensoreinrichtung 9 (Figur 3) versehen, deren Meßwerte über eine Leitung 10 einer nicht dargestellten Steuervorrichtung beziehungsweise Regelungsvorrichtung zugeführt werden, welche Vorrichtung die den Hochdruckdüsen 6 zugeführte Feuchtigkeitsmenge (Wassermenge) in geeigneter Weise derart beeinflußt, daß sich stromab der Düsenkammer 1 stets nur eine derart hohe Übersättigung der Luft einstellt, daß es nicht zu einem Feuchtigkeitsniederschlag in der lufttechnischen Einrichtung kommt.

Sofern die Sprühdüsen ausschließlich sehr feinen Nebel erzeugen, kann ohne Wasserabscheider gearbeitet werden. Wenn nicht, wird vor der Meßeinrichtung (Flüssigkeits-Sensoreinrichtung 9) ein Wasserabscheider 21 eingesetzt. Sofern letzterer verstellbar ist, das heißt, wenn der Abscheidegrad der Größe der Wassertröpfchen durch Veränderung des Luftumlenkweges des Abscheiders anpaßbar ist, kann er auch zur Steuerung der Nebelkonzentration mit herangezogen werden.

Die Figur 2 zeigt die Vorrichtung 8 zur Ermittlung der Nebelkonzentration in der Draufsicht. Sie besteht aus einem Tragrohr 11, an dem mehrere Feuchtigkeitsniederschlags-Elemente 12 angeordnet sind. Die Feuchtigkeitsniederschlags-Elemente 12 weisen unterschiedliche geometrische Abmessungen auf. Sie sind als Stäbe 13 kreisförmigen Querschnitts mit unterschiedlichen Durchmessern ausgebildet. Die Stäbe 13 sind an dem Tragrohr 11 reihenförmig nebeneinander angeordnet, so daß eine Stabreihe 14 (Figur 3) gebildet ist. Die einzelnen Stäbe 13 verlaufen parallel zueinander beabstandet und weisen an ihren dem Tragrohr 11 entgegengesetzten Enden Abrundungen 15 auf. Die unterschiedlichen Durchmesser der Stäbe 13 sind derart gewählt, daß sie sich -gemäß Figur 2- von links nach rechts jeweils vergrößern. Die Länge aller Stäbe 13 ist gleich groß.

Gemäß Figur 3 -die die Vorrichtung in Seitenansicht jedoch der Einfachheit wegen nur den ersten und den letzten Stab zeigt- ist im Bereich der Abrundungen 15 der Stäbe 13 die Flüssigkeits-Sensoreinrichtungen 9 angeordnet. Sie besteht aus einem U-Profil 16, in das die Enden der Stäbe 13 ein-greifen. Jeder Abrundung 15 jedes Stabes 13 ist eine optische Einrichtung 17 zugeordnet, die einen Lichtsender 18 und einen Lichtempfänger 19 umfaßt. Der Lichtsender 18 befindet sich auf der einen Seite des U-Profils 16; der Lichtempfänger 19 ist auf der anderen Seite des U-Profils 16 angeordnet, wobei die Schenkel des U-Profils 16 mit Durchbrüchen 20 versehen sind, um die Lichtstrahlen der optischen Einrichtung 17 hindurch zu lassen. Die optische Einrichtung 17, die bei jedem der Stäbe 13 vorgesehen ist, bildet einen Sensor, der die jeweilige Abrundung 15 im Hinblick auf die Bildung von Flüssigkeitstropfen überwacht. Schlägt sich Feuchtigkeit an einem Stab 13 nieder, so kommt es zur Tropfenbildung, wobei der Tropfen zur Abrundung 15 des entsprechenden Stabes 13 läuft und dort von der optischen Einrichtung 17 erfaßt wird. Eine entsprechende Dateninformation wird dann über die Leitung 10 und einer nicht dargestellten Steuer- beziehungsweise Regeleinrichtung zugeführt, die die Wasserzufuhr zur Hochdrucksprüheinrichtung 3 beeinflußt.

Das Tragrohr 11 ist quer zur Richtung des Luftstromes 2, insbesondere senkrecht zur Richtung des Luftstromes 2, in der Düsenkammer 1 derart angeordnet, daß die Längsachsen der Stäbe 13 vertikal nach unten hängen.

Während des Betriebes der Düsenkammer 1 wird der Luftstrom 2 mittels der Hochdrucksprüheinrichtung 3 befeuchtet, wobei die befeuchtete, übersättigte Luft anschließend zur Vorrichtung 8 gelangt. Je nach Sättigungsgrad wird sich gegebenenfalls ein Feuchtigkeitsniederschlag auf den Stäben 13 einstellen, wobei auf Stäben 13 geringeren Durch-messers eher eine Tropfenbildung erfolgt. Mittels der Flüssigkeits-Sensoreinrichtung 9 läßt sich im weiteren Betrieb die Hochdrucksprüheinrichtung 3 derart steuern, daß die Stäbe 13 mit den kleinsten Durchmessern immer Flüssigkeitsniederschlag aufweisen, um so die gewünschte zulässige Übersättigung anzuzeigen, während die Stäbe 13 mit den mittleren Durchmessern Steuer- oder Regeleingriffe in der Wasserzufuhr und eventuell am Wasserabscheider 21 einleiten, damit die zulässige Übersättigung nicht überschritten wird. Die dicksten Stäbe 13 müssen trocken bleiben, damit die luftführenden Elemente nach dem Befeuchter trocken bleiben. Das Auftreten von Niederschlag an diesen letztgenannten Stäben dient daher zur sicheren Begrenzung der Übersättigung auf das zulässige Maß.

Gemäß Figur 1 kann stromab der Vorrichtung 8 der Feuchtigkeitsabscheider 21 in der Düsenkammer 1 angeordnet sein, der feinste Wassertröpfchen durchläßt, jedoch größere Tröpfchen auffängt und in den Wasserkreislauf zurückführt. Vorzugsweise befindet sich der Feuchtigkeitsabscheider 21 zwischen der Sprüheinrichtung und der Vorrichtung 8.

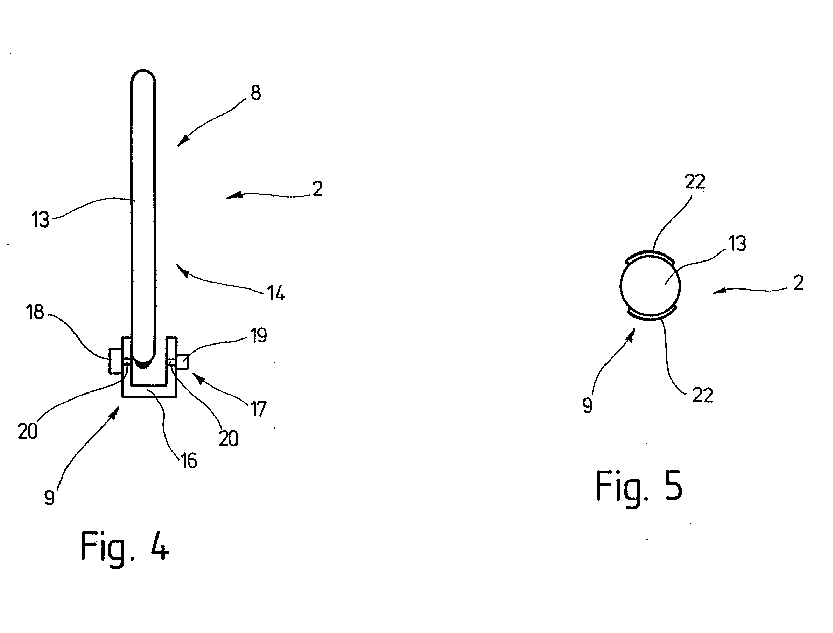

Die Figur 4 zeigt ein weiteres Ausführungsbeispiel einer Vorrichtung 8, die im wesentlichen dem Ausführungsbeispiel der Figur 3 entspricht. Die Stäbe 13 sind jedoch nicht an einem Tragrohr 11 befestigt, sondern direkt auf der dem Luftstrom 2 abgewandten Seite mit einem Schenkel des U-Profils 16 verbunden.

Die Figur 5 zeigt einen Blick von unten auf einen der Stäbe 13 einer weiteren Ausführungsform, dem als Feuchtigkeits-Sensoreinrichtung 9 zwei Elektroden 22 zugeordnet sind. Der Stab 13 besteht aus elektrisch nichtleitendem Material. Die beiden Elektroden 22 befinden diametral gegenüberliegend auf der Außenseite des Stabes 13. Schlägt sich Feuchtigkeit auf dem Stab 13 nieder, so stellt der Feuchtigkeitsbelag eine mehr oder weniger leitfähige Verbindung zwischen den beiden Elektroden 22 her, so daß sich der einstellende elektrische Widerstand als Signal zur Steuerung bzw. Regelung der Befeuchtungseinrichtung eignet. In der Figur 5 ist lediglich ein Stab 13 mit Elektroden 22 dargestellt; selbstverständlich sind derartige Elektroden 22 an allen Stäben 13 der Stabreihe 14 vorgesehen.

## Patentansprüche

1. Vorrichtung zur Ermittlung der Nebelkonzentration in einem befeuchteten Luftstrom einer lufttechnischen Einrichtung, vorzugsweise einer Lüftungs- oder Klima-Anlage, **gekennzeichnet durch** mehrere, im Luftstrom (2) angeordnete Feuchtigkeitsniederschlags-Elemente (12) mit unterschiedlichen geometrischen Abmessungen, denen je ein Sensor einer Feuchtigkeits-Sensoreinrichtung (9) zugeordnet ist.

2. Vorrichtung nach Anspruch 1, **dadurch gekennzeichnet** , daß die Feuchtigkeitsniederschlags-Elemente (12) als Stäbe (13) mit unterschiedlichen Dickenabmessungen ausgebildet sind.

3. Vorrichtung nach einem der vorhergehenden Ansprüche, **dadurch gekennzeichnet**, daß die Stäbe (13) kreisförmige Querschnitte mit unterschiedlichen Durchmessern aufweisen.

4. Vorrichtung nach einem der vorhergehenden Ansprüche, **dadurch gekennzeichnet**, daß die Stäbe (13) hängend im Luftstrom (2) angeordnet sind und daß im Bereich ihrer unteren Enden (Abrundungen 15) die Feuchtigkeits-Sensoreinrichtung (9) angeordnet ist.

5. Vorrichtung nach einem der vorhergehenden Ansprüche, **dadurch gekennzeichnet**, daß die Stäbe (13) reihenförmig nebeneinander angeordnet sind, wobei die Längsrichtung der Stabreihe (14) quer, vorzugsweise rechtwinklig, zur Richtung des Luftstroms (2) verläuft.

6. Vorrichtung nach einem der vorhergehenden Ansprüche, **dadurch gekennzeichnet**, daß die Stäbe (13) vertikal oder schräg zur Vertikalen verlaufend angeordnet sind.

7. Luftwäscher zur Befeuchtung eines Luftstromes einer lufttechnischen Anlage, insbesondere einer Lüftungs- oder Klima-Anlage, mit einer im Luftstrom angeordneten Flüssigkeits-Sprüheinrichtung, **gekennzeichnet** durch eine Vorrichtung nach Anspruch 1, die die Nebelkonzentration bestimmt und die Sprüheinrichtung derart steuert beziehungsweise regelt, daß ein Feuchtigkeitsniederschlag innerhalb der lufttechnischen Anlage vermieden ist.

8. Luftwäscher nach Anspruch 7, **dadurch gekennzeichnet** , daß die Sprüheinrichtung eine Hochdruck-Sprüheinrichtung (3) ist.

9. Luftwäscher nach einem der Ansprüche 7 und 8, **dadurch gekennzeichnet**, daß die Sprüheinrichtung Hochdruckdüsen (6) aufweist.

10. Luftwäscher nach einem der Ansprüche 7-9, **dadurch gekennzeichnet**, daß die Nebelkonzentration durch Steuerung beziehungsweise Regelung des Verdüsungsdrucks eingestellt wird.

11. Luftwäscher nach einem der Ansprüche 9 oder 10, **dadurch gekennzeichnet**, daß der Verdüsungsdruck über die Drehzahl einer die Hochdruckdüsen (6) speisenden Hochdruckpumpe gesteuert/geregeltwird.

12. Luftwäscher nach einem der Ansprüche 8-11, **dadurch gekennzeichnet**, daß die Nebelkonzentration über einen Bypaß mit verstellbarem ReRegelventilbei konstanter Drehzahl der Hochdruckpumpe gesteuert beziehungsweise geregelt wird.

13. Luftwäscher nach einem der Ansprüche 7-12, **dadurch gekennzeichnet**, daß die Nebelkonzentration bei mehreren Hochdruckdüsen (6) durch An- beziehungsweise Abschalten einzelner Hochdruckdüsen (6) gesteuert beziehungsweise geregelt wird.

14. Luftwäscher nach einem der Ansprüche 7 - 13, **dadurch gekennzeichnet**, daß der Sprüheinrichtung oder Hochdrucksprüheinrichtung (3) ein Feuchtigkeitsabscheider (21), insbesondere Wasserabscheider, nachgeschaltet ist.

15. Luftwäscher nach Anspruch 14, **dadurch gekennzeichnet**, daß der nachgeschaltete Feuchtigkeitsabscheider, insbesondere Wasserabscheider (21), in bezug auf seinen bestimmte Tropfengrößen (Tropfenspektren) betreffenden Abscheidegrad verstellbar ist.

## Claims

1. A device for determining the vapour concentration in a moistened air stream of a ventilation device, preferably of a ventilation system or air conditioning installation, characterised by a plurality of moisture-deposit elements (12) which are arranged in the air stream (2), have different geometrical dimensions and with each of which there is associated a respective sensor of a moisture sensor device (9).

2. A device in accordance with Claim 1, characterised in that the moisture-deposit elements (12) are in the form of rods (13) of different thickness.

3. A device in accordance with any one of the preceding Claims, characterised in that the rods (13) have circular cross-sections of different diameter.

4. A device in accordance with any one of the preceding Claims, characterised in that the rods (13) are arranged suspended in the air stream (2), and in that the moisture sensor device (9) is arranged in the region of their lower ends (roundings 15).

5. A device in accordance with any one of the preceding Claims, characterised in that the rods (13) are arranged side by side in a row, the longitudinal direction of the rod row (14) running transversely, preferably at right angles, to the direction of the air stream (2).

6. A device in accordance with any one of the preceding Claims, characterised in that the rods (13) are arranged to lun vertically or at an incline to the vertical.

7. An air washer for moistening an air stream of a ventilation installation, in particular of a ventilation system or air conditioning installation, having a fluid spraying device arranged in the air stream, characterised by a device in accordance with Claim 1 which detrmines the vapour concentration and controls or regulates the spraying device in such a manner that a moisture deposit within the ventilation installation is avoided.

8. An air washer in accordance with Claim 7, characterised in that the spraying device is a high-pressure spraying device (3).

9. An air washer in accordance with one of Claims 7 and 8, characterised in that the spraying device has high-pressure nozzles (6).

10. An air washer in accordance with any one of Claims 7 - 9, characterised in that the vapour concentration is adjusted through controlling or regulating the spraying pressure.

11. An air washer in accordance with one of Claims 9 or 10, characterised in that the spraying pressure is controlled/regulated via the rate of revolution of a high-pressure pump supplying the high-pressure nozzles (6).

12. An air washer in accordance with any one of Claims 8 - 11, characterised in that the vapour concentration is controlled or regulated via a by-pass with adjustable control valve at a constant rate of revolution of the high-pressure pump.

13. An air washer in accordance with any one of Claims 7 - 12, characterised in that the vapour concentration at a plurality of high-pressure nozzles (6) is controlled or regulated through putting individual high-pressure nozzles (6) in or out of operation.

14. An air washer in accordance with any one of Claims 7 - 13, characterised in that a moisture separator (21), in particular a water separator, is connected after the spraying device or high-pressure spraying device (3).

15. An air washer in accordance with Claim 14, characterised in that the upstream moisture separator, in particular water separator (21), is adjustable with regard to its separation degree affecting certain drop sizes (drop spectra).

## Revendications

1. Dispositif pour déterminer la concentration d'humidité dans un flux d'air humidifié d'un dispositif aéraulique, de préférence d'une installation d'aération ou de climatisation, caractérisé par plusieurs éléments pour condenser l'humidité (12) disposés dans le flux d'air (2), qui présentent différentes dimensions géométriques et à chacun desquels est associé un détecteur d'un dispositif de détection d'humidité (9).

2. Dispositif selon la revendication 1, caractérisé en ce que les éléments pour condenser l'humidité (12) sont réalisés en forme de barres (13) de différentes épaisseurs.

3. Dispositif selon l'une des revendications précédentes, caractérisé en ce que les barres (13) présentent des sections transversales circulaires de différents diamètres.

4. Dispositif selon l'une des revendications précédentes, caractérisé en ce que les barres (13) sont suspendues dans le flux d'air (2), et en ce que, dans la zone de leurs extrémités inférieures (arrondis 15), est disposé le dispositif de détection d'humidité (9).

5. Dispositif selon l'une des revendications précédentes, caractérisé en ce que les barres (13) sont disposées en rangée les unes à côté des autres, la direction longitudinale de la rangée de barres (14) s'étendant transversalement, de préférence perpendiculairement à la direction du flux d'air (2).

6. Dispositif selon l'une des revendications précédentes, caractérisé en ce que les barres (13) sont disposées verticalement ou en biais par rapport à la verticale.

7. Laveur d'air pour humidifier un flux d'air d'un dispositif aéraulique, notamment d'une installation d'aération ou de climatisation, comprenant un dispositif pulvérisant du liquide placé dans le flux d'air, caractérisé par un dispositif selon la revendication 1 qui détermine la concentration d'humidité et commande ou règle le dispositif de pulvérisation de manière à éviter la condensation de l'humidité à l'intérieur du dispositif aéraulique.

8. Laveur d'air selon la revendication 7, caractérisé en ce que le dispositif de pulvérisation est un dispositif de pulvérisation à haute pression (3).

9. Laveur d'air selon la revendication 7 ou 8, caractérisé en ce que le dispositif de pulvérisation présente des pulvérisateurs à haute pression (6).

10. Laveur d'air selon l'une des revendications 7 à 9, caractérisé en ce que la concentration d'humidité est mise au point en commandant ou en réglant la pression d'atomisation.

11. Laveur d'air selon la revendication 9 ou 10, caractérisé en ce que la pression d'atomisation est commandée/réglée par le biais du régime d'une pompe à haute pression alimentant les pulvérisateurs à haute pression (6).

12. Laveur d'air selon l'une des revendications 8 à 11, caractérisé en ce que la concentration d'humidité est commandée ou réglée par le biais d'une dérivation comportant une vanne de réglage réglable lorsque la pompe à haute pression a un régime constant.

13. Laveur d'air selon l'une des revendications 7 à 12, caractérisé en ce qu'en présence de plusieurs pulvérisateurs à haute pression (6), la concentration d'humidité est commandée ou réglée en mettant en marche ou en coupant individuellement des pulvérisateurs à haute pression (6).

14. Laveur d'air selon l'une des revendications 7 à 13, caractérisé en ce qu'un séparateur d'humidité (21), notamment un séparateur d'eau, est monté en aval du dispositif de pulvérisation ou dispositif de pulvérisation à haute pression (3).

15. Laveur d'air selon la revendication 14, caractérisé en ce que le séparateur d'humidité, notamment le séparateur d'eau (21), monté en aval peut être réglé du point de vue de son degré de séparation qui porte sur une certaine taille des gouttes (spectre des gouttes).
